# FASCICULE DE BREVET EUROPEEN

(11) **EP 3 560 571 B1**
(45) Date de publication et mention de la délivrance du brevet: **13.12.2023**
(21) Numéro de dépôt: 18305504.5
(22) Date de dépôt: 23.04.2018
(51) Int. Cl.: B01D 15/18, B01D 15/36, C13B 20/14, C13K 1/00, C13K 11/00

(54) **PROCEDE DE PURIFICATION DE FRUCTOSE**
FRUKTOSE-REINIGUNGSVERFAHREN
METHOD FOR PURIFYING FRUCTOSE

(43) Date de publication de la demande: 30.10.2019
(73) Titulaire: Novasep Process Solutions, 01700 Saint-Maurice-de-Beynost (FR)
(72) Inventeur: EBRAN, Teddy, 28230 Pont de Chéruy (FR); THIBAULT, Guillaume, 69740 Genas (FR)
(74) Mandataire: Bandpay & Greuter

(56) Documents cités:
- WO-A1-03/016577
- WO-A1-2014/030030
- WO-A1-2016/061037
- FR-A1- 2 668 775
- US-A- 4 373 025
- US-A- 5 221 478

## Description

### DOMAINE DE L'INVENTION

La présente invention concerne un procédé de purification d'une composition de fructose, ainsi qu'un procédé de production d'une composition de fructose à partir d'une composition initiale comprenant du glucose employant ce procédé de purification.

### ARRIERE-PLAN TECHNIQUE

Dans l'industrie agroalimentaire, il est fait un usage important de compositions à base de fructose, notamment connues sous le sigle HFS pour « *High Fructose Syrup* ». En particulier, on connaît sous la désignation HFS 55 une composition comprenant environ 55 % en masse de fructose par rapport à la matière sèche totale, et sous la désignation HFS 95 une composition comprenant au moins 95 % en masse de fructose par rapport à la matière sèche totale.

Il est connu de fabriquer les compositions HFS 55 et HFS 95 par isomérisation à partir d'une composition à base de glucose. Traditionnellement, le procédé de fabrication inclut une première évaporation pour concentrer la composition à base de glucose, puis une étape d'isomérisation, puis une autre évaporation pour effectuer une deuxième concentration, puis une purification chromatographique permettant de séparer un flux enrichi en fructose d'un flux enrichi en glucose, et une autre évaporation pour effectuer une troisième concentration, à partir du flux enrichi en fructose.

Ce procédé nécessite une installation relativement lourde et implique une consommation énergétique importante.

Par exemple, la demande de brevet US4373025A décrit un procédé d'isomérisation du glucose en fructose, comprenant la mise en contact d'un mélange avec un adsorbant comprenant une zéolite X contenant des cations potassium sur les sites cationiques échangeables, l'adsorption sélective du glucose du mélange de flux d'effluent, la récupération du glucose de haute pureté et le recyclage du glucose de haute pureté vers l'étape d'isomérisation.

La demande de brevet WO2014/030030A1 concerne un procédé de production d'un produit contenant du sucre à partir d'un fruit, comprenant les étapes suivantes : a) utiliser un jus de fruit contenant du glucose et du fructose; b) déminéraliser et décolorer le jus de fruit afin d'obtenir un jus de fruit clarifié et déminéralisé; c) concentrer le jus de fruit clarifié et déminéralisé afin d'obtenir un jus de fruit clarifié et déminéralisé concentré; et d) séparer le jus de fruit clarifié, déminéralisé et concentré par chromatographie afin d'obtenir au moins une fraction enrichie en glucose et au moins une fraction enrichie en fructose; après l'étape d), une étape e) consistant à filtrer la fraction enrichie en glucose et la fraction enrichie en fructose sur un filtre au carbone.

La demande de brevet US5221478A décrit un procédé pour la séparation chromatographique d'un mélange fluide dans lequel le mélange est mis en contact avec une résine échangeuse d'ions, élué à travers la résine dans des conditions telles que la vitesse de passage d'un composant du mélange à travers le lit de résine est retardée par rapport à la vitesse de passage d'un second composant du mélange, et un premier courant de produit riche en ledit premier composant et un second courant de produit riche en ledit second composant sont récupérés.

La demande de brevet FR2668775A1 concerne un procédé de préparation de glucose et de fructose à partir de saccharose, au moyen d'une hydrolyse enzymatique, dans laquelle une solution de saccharose est hydrolysée, sous forme de procédé continu, par une enzyme invertase immobilisée sur un substrat solide, et une fraction glucose et une fraction fructose sont séparées de la solution obtenue par l'hydrolyse, sous forme de procédé continu, au moyen d'un procédé chromatographique à lit fluide simulé.

La demande de brevet WO2016061037A1 concerne un procédé d'ajustement de la composition d'un produit de chromatographie destiné à obtenir une proportion enrichie cible d'un constituant souhaité à partir d'un flux d'alimentation ayant une proportion inférieure du constituant souhaité à l'aide d'une chromatographie à lit mobile simulé (« SMB »), l'éluant de l'appareil à SMB pouvant comprendre le flux d'alimentation qui est enrichi lui-même.

Il existe donc un besoin de produire des compositions à base de fructose, telles que la composition HFS 55 ou la composition HFS 95, avec une plus grande efficacité (et par exemple avec un meilleur rendement) et/ou avec des dimensions de colonnes de chromatographie réduites et/ou avec des dimensions de colonnes de chromatographie réduites.

### RESUME DE L'INVENTION

Selon un premier objet, l'invention concerne un procédé de purification d'un mélange à séparer contenant du fructose, dans un système de chromatographie multicolonnes, le procédé comprenant successivement, de manière cyclique :
- une étape de collecte d'un raffinat, une étape d'injection du mélange à séparer, une étape de collecte d'un extrait et une étape d'injection d'éluant ;

dans lequel le mélange à séparer présente une concentration massique en matière sèche de 45 à 55 %, le procédé étant mis en oeuvre à une température de 50 à 62°C ; et
dans lequel :
   - le volume d'éluant injecté est de 0,12 à 0,28 BV ; et
   - le volume de mélange à séparer injecté est de 0,13 à 0,40 BV, l'unité BV signifiant « *Bed Volume* » et correspondant au volume de phase mobile rapporté au volume de lit de phase stationnaire.

Dans des modes de réalisation, le mélange à séparer présente une concentration massique en matière sèche de 48 à 52 %, de préférence d'environ 50 %.

Dans des modes de réalisation, le procédé est mis en oeuvre à une température de 55 à 60°C.

Dans des modes de réalisation, l'extrait contient une proportion massique de fructose, par rapport à la matière sèche totale, supérieure ou égale à 95 %, de préférence supérieure ou égale à 98 %.

Dans des modes de réalisation, le mélange à séparer contient du glucose, et de préférence comprend :
- une proportion massique de glucose par rapport à la matière sèche totale de 40 à 65 %, de préférence de 45 à 60 %, de préférence encore de 50 à 55 % ; et / ou
- une proportion massique de fructose par rapport à la matière sèche totale de 30 à 55 %, de préférence de 35 à 50 %, de préférence encore de 40 à 45 %.

Dans des modes de réalisation, au moins 90 % en masse du fructose contenu dans le mélange à séparer est récupéré dans l'extrait.

Dans des modes de réalisation, le mélange à séparer comprend des polysaccharides, et dans lequel au moins 70 %, de préférence au moins 80 % en masse des polysaccharides contenus dans le mélange à séparer sont récupérés dans le raffinat.

Dans des modes de réalisation, le système de chromatographie multicolonnes comprend de 4 à 6 cellules ; et/ou comprend des colonnes ayant une longueur de 1,0 à 2,6 m, de préférence de 1,4 à 2,0 m.

Dans des modes de réalisation :
- le volume d'éluant injecté est de 0,12 à 0,22 BV.

Dans des modes de réalisation, le système de chromatographie multicolonnes comprend une pluralité de colonnes et des liaisons fluidiques inter-colonnes, et la vitesse des fluides dans les liaisons fluidiques inter-colonnes est supérieure à 0,5 m/s, de préférence supérieure à 1 m/s et de préférence encore supérieure à 1,5 m/s.

Dans des modes de réalisation, le système de chromatographie multicolonnes comprend une pluralité de colonnes et des liaisons fluidiques inter-colonnes, et le volume des liaisons fluidiques inter-colonnes est inférieur à 10 %, de préférence inférieur à 5 % et de préférence inférieur à 3 % du volume des colonnes.

Dans des modes de réalisation, le système de chromatographie multicolonnes comprend une zone 4 située entre une ligne de collecte du raffinat et une ligne d'injection d'éluant, la zone 4 comprenant un volume de phase mobile inférieur à 0,56 BV, de préférence inférieur à 0,54 BV.

L'invention a également pour objet un procédé de production d'une composition de fructose comprenant les étapes successives suivantes :
- fourniture d'une composition initiale ;
- hydrolyse, isomérisation, concentration par évaporation et/ou déminéralisation de la composition initiale pour obtenir une composition intermédiaire ;
- purification de la composition intermédiaire en tant que mélange à séparer selon le procédé décrit ci-dessus, permettant d'obtenir un raffinat riche en glucose et un extrait riche en fructose ;
- concentration de l'extrait par évaporation d'eau.

Dans des modes de réalisation, le procédé comprend en outre une étape d'élimination de couleur résiduelle de l'extrait avant l'étape de concentration de l'extrait, de préférence par résine échangeuse d'ions et/ou par charbon actif ainsi que, de préférence, une étape de filtration stérile.

Dans des modes de réalisation, le raffinat est recyclé et ajouté à la composition initiale avant l'étape de concentration de la composition initiale.

Dans des modes de réalisation :
- la composition initiale présente une concentration massique en matière sèche de 25 à 35 %, de préférence d'environ 31 % ; et/ou
- la composition initiale concentrée présente une concentration massique en matière sèche supérieure ou égale à 40 % ; et/ou
- la composition intermédiaire comprend au moins 40 % en masse de fructose par rapport à la matière sèche totale ; et/ou
- la composition de fructose produite présente une concentration massique en matière sèche supérieure ou égale à 75 %, de préférence de 77 % environ.

Dans des modes de réalisation :
- la composition de fructose produite contient une proportion massique de fructose, par rapport à la matière sèche totale, supérieure ou égale à 95 %, de préférence supérieure ou égale à 98 %.

Dans des modes de réalisation, le procédé comprend l'injection d'eau en tant qu'éluant dans l'étape de purification, le rapport du débit massique d'éluant sur le débit massique de matière sèche de composition de fructose produite étant de 0,5 à 1,3, de préférence de 0,6 à 1,2.

Dans des modes de réalisation, le procédé comprend une étape d'élimination de polysaccharides contenus dans le raffinat par nanofiltration ou purification chromatographique, suivie du recyclage du raffinat vers la composition initiale. La présente invention permet de répondre au besoin exprimé dans l'état de la technique. Elle fournit plus particulièrement un procédé permettant la production d'une composition à base de fructose, telle qu'une composition HFS 55 ou HFS 95, de manière plus efficace, et notamment avec un meilleur rendement.

L'invention repose sur la constatation que le fructose a tendance à se dégrader pendant la purification chromatographique, et ce d'autant plus que la température est élevée, et que la concentration massique en matière sèche du mélange à séparer est élevée. Cette dégradation du fructose nuit à l'efficacité du procédé, surtout lorsqu'un degré de pureté élevé en fructose est souhaité, car l'obtention de ce degré de pureté nécessite un temps de séjour relativement long dans le système chromatographique.

En particulier, il a été découvert que le phénomène de dégradation du fructose augmente de façon significative à une température supérieure à 62°C. L'invention prévoit donc une purification à une température inférieure ou égale à 62°C.

De manière générale, dans un procédé de séparation industriel, l'usage est d'opérer à la concentration la plus élevée possible pour le mélange à séparer. Il est fait référence à cet égard à Chromatographie Processes, Modeling, Simulation and Design, par Roger Marc Nicoud, Cambridge University Press, 2015, p.530-531. Il est expliqué dans cet ouvrage que la concentration de la charge doit être aussi élevée que possible, une limite haute de cette concentration étant associée à des risques de miscibilité ou à une pression trop importante dans la colonne.

A la différence de l'usage habituel, la présente invention permet une purification optimale, en travaillant à une concentration optimale ou quasi-optimale compte tenu de la dégradation du fructose (c'est-à-dire en travaillant dans une gamme de concentration la plus élevée possible, sans toutefois observer une dégradation significative du fructose).

L'invention permet donc éventuellement de réduire le volume d'éluant consommé (et donc la consommation énergétique), et/ou de réduire le volume de phase stationnaire utilisé, et/ou d'augmenter le volume de charge à traiter, et/ou de réduire la taille des colonnes chromatographiques, et ce le cas échéant avec une installation de production plus compacte et moins onéreuse.

### BREVE DESCRIPTION DES FIGURES

La **figure 1** représente de manière schématique un système chromatographique SSMB susceptible d'être utilisé pour mettre en oeuvre le procédé de l'invention.
La **figure 2** représente de manière schématique une installation de production de fructose, dans certains modes de réalisation.
La **figure 3** représente de manière schématique une installation de production de fructose, dans d'autres modes de réalisation.
La **figure 4** est une superposition de trois chromatogrammes analytiques, comme décrit à l'exemple 2. Le temps d'élution est indiqué en abscisse, et l'intensité est indiquée en unités arbitraires en ordonnée.
La **figure 5** illustre la teneur en impuretés (en unités arbitraires en ordonnée), comme décrit à l'exemple 2, dans différents échantillons de fructose en fonction de la concentration massique en matière sèche et de la température appliquée (en abscisse).

### DESCRIPTION DE MODES DE REALISATION DE L'INVENTION

L'invention est maintenant décrite plus en détail et de façon non limitative dans la description qui suit.

### Purification chromatographique

La purification chromatographique de l'invention est effectuée dans un ensemble de plusieurs colonnes de chromatographie contenant une phase stationnaire, avec successivement, de manière cyclique, dans une partie donnée du système :
- une étape de collecte d'un raffinat, une étape d'injection du mélange à séparer, une étape de collecte d'un extrait et une étape d'injection d'éluant.

Les différentes étapes ci-dessus se succèdent temporellement dans une partie du système. La partie en question du système est de préférence située entre la sortie d'une colonne et l'entrée de la colonne suivante. Alternativement, la partie en question du système peut inclure une colonne ou une partie de colonne.

A un instant donné, une ou plusieurs des étapes ci-dessus peuvent être simultanément mises en oeuvre dans une ou plusieurs parties du système. Par exemple, toutes ces étapes peuvent être simultanément mises en oeuvre dans des parties respectives du système.

Le « *mélange à séparer* », ou « *charge* », ou « *charge à traiter* » est le mélange contenant un produit d'intérêt (ici le fructose) et au moins une impureté qui est soumis à la purification chromatographique. La purification a vocation à enrichir une fraction (l'extrait ou le raffinat) en ledit produit d'intérêt.

Par « *raffinat* », on entend la fraction obtenue par élution qui contient les espèces relativement les moins retenues par la phase stationnaire, et donc dont l'élution est la plus rapide.

Par « *extrait* », on entend la fraction obtenue par élution qui contient les espèces relativement les plus retenues par la phase stationnaire, et donc dont l'élution est la plus lente.

Par fraction « *enrichie »* en une espèce A et « appauvrie » en une espèce B, on entend que le rapport de concentrations molaires espèce A / espèce B dans la fraction est supérieur à celui du flux en entrée de la purification chromatographique (indépendamment des effets de concentration ou de dilution globale).

L'éluant est un fluide injecté pour déplacer les espèces retenues par la phase stationnaire. Dans l'invention, l'éluant utilisé est de préférence une solution aqueuse, ou de l'eau.

Par « *phase mobile* » on entend le fluide qui se déplace dans les colonnes du système. Selon sa position, chaque colonne est traversée par un volume de phase mobile dépendant de la zone dans laquelle se trouve la colonne, ce volume pouvant être différent du volume d'éluant qui est injecté dans l'une ou l'autre des colonnes. Dans le cas d'un procédé multicolonnes avec des zones identifiées entre les lignes d'entrées et sorties (comme décrit plus en détail ci-dessous), le terme « *volume de phase mobile* » désigne le volume de fluide qui entre dans une zone. Ce fluide peut être différent de l'éluant au sens strict, mais il contribue au déplacement des produits dans chaque colonne de la zone. On parle ainsi de volume de phase mobile associé à chaque zone. La configuration préférée des zones dans le système chromatographique est décrite plus en détail ci-après.

Dans certains modes de réalisation avantageux, le système chromatographique comprend des organes de séquençage des lignes d'injection et de collecte. En particulier, le séquençage de ces lignes d'injection et de collecte a lieu sur un cycle de fonctionnement du système. Dans la présente demande, un « *cycle de fonctionnement* » ou « *cycle* » désigne la durée au bout de laquelle les lignes d'injection et de collecte ont été séquencées jusqu'à revenir à leur position initiale dans le système. Au bout d'un cycle, le système est à nouveau dans sa configuration initiale. Un cycle comporte en général autant de « *périodes* » que de colonnes. Ainsi le cycle d'un procédé mis en oeuvre sur un système à 8 colonnes est composé de 8 périodes successives.

L'unité BV (« *Bed Volume* ») permet de mesurer le volume de phase mobile circulant dans chaque zone (ou d'éluant injecté, ou de charge à traiter injectée), rapporté au volume de lit de phase stationnaire dans une colonne. La mesure de ces volumes s'entend par période.

La phase stationnaire utilisée dans l'invention peut être une résine cationique, anionique, forte ou faible, ou un mélange de celles-ci, ayant une granulométrie (Dv50) comprise entre 100 et 600 µm, de préférence entre 170 et 400 µm. La purification chromatographique de l'invention est mise en oeuvre dans un système chromatographique multicolonnes. De préférence, le système chromatographique comprend de 4 à 10 colonnes.

De préférence, la purification chromatographique de l'invention de l'invention est mise en oeuvre de façon continue.

De préférence, la purification chromatographique de l'invention est un procédé chromatographique périodique à accumulation.

Par « *procédé à accumulation* », on entend un procédé chromatographique dans lequel l'injection du mélange à séparer (flux de départ) est intercalée ou additionnée à un profil de concentration non nulle passant de la sortie à l'entrée d'une colonne.

Des exemples de tels procédés à accumulation sont les procédés AMB, SMB, VariCol, Powerfeed, ModiCon, iSMB ou SSMB.

Le procédé à lit mobile simulé (ou SMB, pour « *simulated moving bed* ») est un procédé multicolonnes continu, l'injection de mélange à séparer étant effectuée sur l'ensemble d'un cycle.

Le procédé SMB peut être notamment un procédé SMB à quatre zones. Dans ce cas, le système comporte un ensemble de colonnes montées en série et en boucle fermée, la sortie d'une colonne étant reliée à une entrée de colonne suivante. Le système comprend au moins une ligne d'injection de mélange à séparer, une ligne de collecte de raffinat, une ligne d'injection d'éluant et une ligne de collecte d'extrait. Les lignes d'injection (de flux de départ et d'éluant) et les lignes de collecte de fractions se déplacent périodiquement et de manière synchrone (séquençage synchrone) au sein de la boucle dans la direction de l'écoulement du fluide circulant à travers la boucle. La durée entre deux décalages de l'ensemble des lignes d'injection et de collecte d'une colonne correspond à une période ; au bout d'un cycle tous les points sont revenus à leur position initiale, le système ayant un fonctionnement cyclique. Un cycle comporte autant de périodes que de colonnes.

Un système AMB (lit mobile réel, ou « *actual moving bed* ») présente un fonctionnement similaire à un système SMB. Toutefois, au lieu de déplacer les points d'injection du flux d'alimentation et de l'éluant, ainsi que des points de collecte, au moyen d'un système de vannes, un ensemble d'unités d'adsorption (colonnes) sont déplacées physiquement par rapport aux points d'alimentation et de collecte. A nouveau, le fonctionnement permet de simuler un lit mobile continu à contre-courant.

La purification chromatographique de l'invention peut être un procédé à injection continue du mélange à séparer (c'est-à-dire un procédé dans lequel l'injection du mélange à séparer est un flux continu). L'injection du mélange à séparer est alors effectuée pendant toute la durée du cycle. La purification chromatographique de l'invention peut également être un procédé à injection quasi-continue du mélange à séparer.

Alternativement, la purification chromatographique de l'invention peut être un procédé dans lequel l'injection du mélange à séparer (flux de départ) est discontinue. Dans ces procédés, l'injection du mélange à séparer n'est pas faite sur l'ensemble d'un cycle mais pendant une durée totale inférieure à un cycle. On peut citer comme procédé à injection discontinue de mélange à séparer le procédé iSMB (« *improved simulated moving bed* » ou SMB amélioré en français), décrit dans les documents EP 0342629 et US 5,064,539, auxquels il est fait expressément référence. Dans ce procédé, dans une étape le système fonctionne en boucle fermée, sans injection ou collecte de produit.

Le procédé SMB séquentiel, ou SSMB (« *sequential simulated moving bed* ») est un autre exemple préféré. Un système SSMB découpe les introductions et collectes des flux en sous séquences appliquées de façons périodiques. Un système SSMB est par exemple décrit dans le document WO 2015/104464.

De préférence, la purification chromatographique de l'invention est un procédé de type SSMB.

Le système chromatographique comprend de préférence des zones 1, 2, 3 et 4 : la zone 1 est située entre une ligne d'injection d'éluant et une ligne de collecte de l'extrait ; la zone 2 est située entre la ligne de collecte de l'extrait et une ligne d'injection du mélange à séparer ; la zone 3 est située entre la ligne d'injection du mélange à séparer et une ligne de collecte du raffinat ; et la zone 4 est située entre ladite ligne de collecte du raffinat et la ligne d'injection d'éluant.

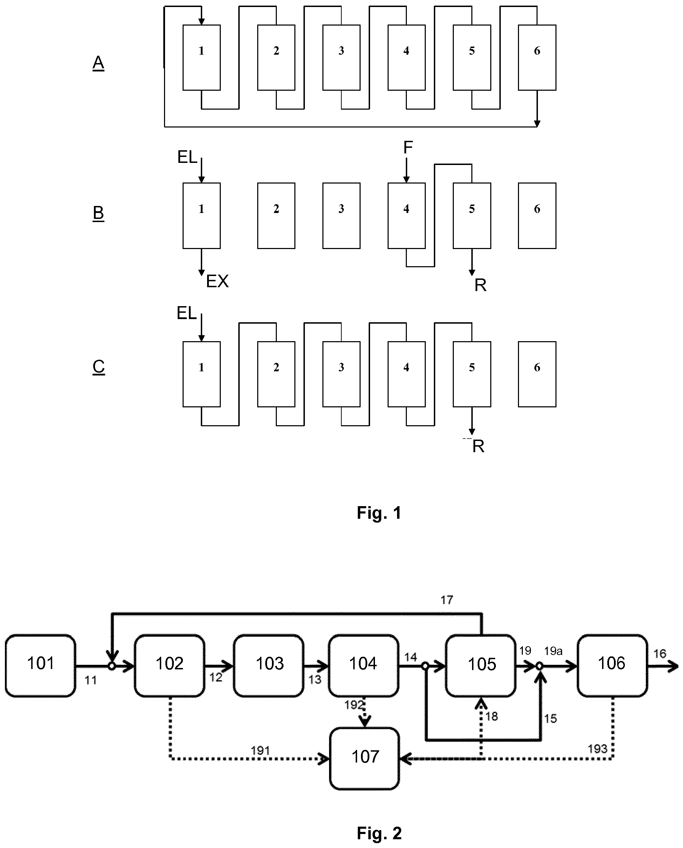

Un exemple possible de système SSMB utilisable dans l'invention est représenté en référence à la **figure 1****.** Dans cet exemple, on utilise six cellules ou colonnes. Ce système peut être opéré selon un fonctionnement cyclique en quatre phases.
- Phase n°1 (partie A de la figure) : phase de boucle, durant laquelle on maintient une circulation continue en boucle fermée sur toutes les cellules placées en série, pour déplacer le volume interstitiel d'une cellule vers la suivante, sans injection d'éluant. L'homme de l'art observe que le volume de phase mobile déplacé dans cette phase contribue aux zones 1, 2, 3 et 4.
- Phase n°2 (partie B de la figure) : charge / injection de charge. La charge du flux (F) est injectée en tête de la quatrième cellule. Simultanément, on collecte un volume sensiblement identique de raffinat (R) en sortie de la cinquième cellule. Les cellules 4 et 5 constituent ici la zone 3. Les cellules 2 et 3 constituent la zone de séparation entre extrait et injection de charge. Elles constituent ici la zone 2. L'homme de l'art observe que le volume de phase mobile déplacé dans cette phase contribue à la zone 3.

- Phase n°3 (partie B de la figure) : élution de l'extrait. L'éluant (EL) est injecté sur la première cellule pour éluer l'extrait (EX), qui est collecté en volume sensiblement identique au bas de la première cellule. La cellule n°1 constitue ici la zone 1. L'homme de l'art observe que le volume de phase mobile déplacé dans cette phase contribue à la zone 1.
- Les phases n°2 et 3 sont de préférence opérées simultanément pour accroître la productivité du système.
- Phase n°4 (partie C de la figure) : élution du raffinat. L'éluant (EL) est injecté en tête de la première cellule, et le raffinat (R) est collecté en volume sensiblement identique sortie de la cinquième. La cellule n°6 est ici une cellule tampon permettant d'assurer la séparation entre la queue de l'extrait et la tête du raffinat. Elle constitue la zone 4. Cette zone peut être omise dans le cas où le degré de pureté et/ou le rendement recherché est relativement limité. L'homme de l'art observe que le volume de phase mobile déplacé dans cette phase contribue aux zones 1, 2 et 3.

Ces phases sont opérées dans l'ordre dans un mode de réalisation préféré, de 1 à 4. Leur enchaînement constitue une séquence complète (également appelée période).

Chaque séquence (phases n°1 à 4) est répétée six fois en décalant les entrées et sorties de cellules par incrémentation du numéro de cellule, de la gauche vers la droite du système : la charge est ainsi injectée en haut de cellule n°1 en séquence n°1, puis en haut de cellule n°2 en séquence n°2, etc.

Un cycle de production complet est réalisé après achèvement des six séquences successives, quand le point d'injection de la charge, initialement en entrée de cellule n°1, revient de nouveau en entrée de cellule n°1.

Dans ce qui précède, on a donné une description du système SSMB en référence au cas où les cellules correspondent à des colonnes. Ceci n'est pas limitatif, et l'invention s'applique aussi aux systèmes dans lesquels les cellules, ou encore compartiments, sont des parties de colonne.

Par ailleurs, le nombre de colonnes présentes en zones 1, 2, 3 et 4 peut varier en fonction de la qualité de séparation désirée. On peut donc concevoir des systèmes du même type avec une cellule, deux cellules, trois cellules, quatre cellules, cinq cellules, six cellules, et jusqu'à douze cellules ou plus.

Les colonnes peuvent avoir notamment une longueur de 1 à 2,6 m, à savoir : de 1,0 à 1,2 m, ou de 1,2 à 1,4 m, ou de 1,4 à 1,6 m, ou de 1,6 à 1,8 m, ou de 1,8 à 2,0 m, ou de 2,0 à 2,2 m, ou de 2,2 à 2,4 m, ou de 2,4 à 2,6 m ; une gamme de 1,4 à 2,0 m est considérée comme préférée. La longueur en question est la longueur utile de la colonne, correspondant à la hauteur du lit de phase stationnaire dans la colonne.

Comme décrit ci-dessus, l'invention permet d'améliorer la performance de l'installation chromatographique. Toutefois, des pertes de performances peuvent être rencontrées lors d'un changement d'échelle de l'installation. En particulier, lorsque le diamètre des colonnes dépasse environ un mètre de diamètre, il peut être crucial de maitriser les volumes morts.

Les volumes morts correspondent au volume (interne) total des « liaisons fluidiques inter-colonnes », c'est-à-dire des liaisons entre la ou les sorties d'une colonne et la ou les entrées de la colonne suivante. Tout élément se trouvant entre deux colonnes successives, tel qu'un tuyau (ou conduite), une vanne ou une pompe, appartient aux liaisons fluidiques inter-colonnes. Ne sont pas considérés comme relevant des volumes morts les volumes se trouvant après une vanne de collecte d'extrait ou de raffinat, ou avant des vannes d'injection de charge ou d'éluant (volumes situés entre le système de chromatographie et les réservoirs de charge à injecter, éluant, extrait et raffinat).

Il est avantageux que la vitesse des fluides circulant dans les liaisons fluidiques inter-colonnes, et en particulier dans les tuyaux ou conduites de celles-ci, dépasse 0,5 m/s, préférentiellement 1 m/s et de préférence encore 1,5 m/s. La vitesse des fluides considérée ici est la vitesse moyenne (débit divisé par la section transversale).

Le contrôle de la vitesse dans les liaisons fluidiques inter-colonnes est effectué par exemple en ajustant le diamètre de ces liaisons pour un débit considéré.

Il est également avantageux que le volume total des liaisons fluidiques inter-colonnes soit inférieur à 10 % du volume total des colonnes, de préférence inférieur à 5 %, voire à 3 % du volume total des colonnes. Cela permet d'éviter une baisse des performances pouvant atteindre un à deux points de pureté ou de rendement. L'ajustement de ces volumes morts peut être effectué en minimisant la longueur totale des liaisons fluidiques inter-colonnes (notamment tuyaux ou conduites).

De préférence, les valeurs de vitesse de fluides et de volumes morts ci-dessus sont associées à des colonnes ayant un diamètre supérieur ou égal à 1 m (diamètre utile, ou diamètre du lit de phase stationnaire dans les colonnes).

### Réglage de la purification chromatographique

Les débits de fluide dans les différentes colonnes du système chromatographique peuvent être ajustés de sorte à obtenir les paramètres de fonctionnement suivants.

Le rapport du débit massique d'éluant sur le débit massique de matière sèche de l'extrait peut valoir de 0,5 à 0,6 ; ou de 0,6 à 0,7 ; ou de 0,7 à 0,8 ; ou de 0,8 à 0,9 ; ou de 0,9 à 1,0 ; ou de 1,0 à 1,1 ; ou de 1,1 à 1,2 ; ou de 1,2 à 1,3. Des gammes de 0,5 à 1,3, notamment 0,6 à 1,2, sont des exemples de gammes préférées.

Le volume d'éluant injecté peut être notamment de 0,12 à 0,14 BV ; ou de 0,14 à 0,16 BV ; ou de 0,16 à 0,18 BV ; ou de 0,18 à 0,20 BV ; ou de 0,20 à 0,22 BV ; ou de 0,22 à 0,24 BV ; ou de 0,24 à 0,26 BV ; ou de 0,26 à 0,28 BV. Des volumes élevés d'éluant sont parfois utilisés industriellement dans le cas où la résine vieillit et où l'intérêt de production nécessite de continuer à produire ; les volumes d'éluant sont alors supérieurs à ceux obtenus au laboratoire.

Le volume de charge à traiter peut être notamment de 0,13 à 0,14 BV ; de 0,14 à 0,16 BV ; ou de 0,16 à 0,18 BV ; ou de 0,18 à 0,20 BV ; ou de 0,20 à 0,22 BV ; ou de 0,22 à 0,24 BV ; ou de 0,24 à 0,26 BV.

La purification chromatographique est effectuée à une température (dite température de fonctionnement) de 50 à 62°C ; en particulier, cette température peut être de 50 à 53°C ; ou de 53 à 55°C ; ou de 55 à 58°C, ou de 58 à 60°C ; ou de 60 à 62°C. Une température de 60°C environ est un exemple de température de fonctionnement particulièrement appropriée. La température de fonctionnement ci-dessus correspond à la température moyenne à laquelle se trouve la phase mobile dans le système chromatographique.

### Mélange à séparer

Le mélange à séparer est une composition comprenant un produit d'intérêt (ici, le fructose) et au moins une impureté, dans un solvant. De préférence le solvant est de l'eau ou une solution aqueuse. De préférence, le glucose est présent en tant qu'impureté.

Dans certains modes de réalisation particulièrement avantageux, le mélange à séparer comprend du glucose et du fructose ; de préférence, l'extrait est enrichi en fructose (et appauvri en glucose) et le raffinat est enrichi en glucose (et appauvri en fructose).

La concentration massique en matière sèche du mélange à séparer est de 45 à 55 %, et plus particulièrement : de 45 à 46 %, ou de 46 à 47 %, ou de 47 à 48 %, ou de 48 à 49 %, ou de 49 à 50 %, ou de 50 à 51 %, ou de 51 à 52 %, ou de 52 à 53 %, ou de 53 à 54 %, ou de 54 à 55 %. Une concentration d'environ 50 % est particulièrement appropriée.

De manière générale, la concentration massique en matière sèche d'une composition correspond à la masse de matière sèche de la composition rapportée à la masse totale de celle-ci. La concentration massique en matière sèche est approximativement égale à la teneur en sucres en degrés Brix.

Dans certains modes de réalisation, la concentration massique en matière sèche du mélange à séparer est ajustée par concentration (notamment évaporation) ou par dilution (par ajout de solvant, de préférence de l'eau) avant injection, afin de travailler dans les gammes définies ci-dessus.

Dans certains modes de réalisation, le mélange à séparer contient les proportions massiques (par rapport à la matière sèche) suivantes :
- de 40 à 65 %, de préférence de 45 à 60 %, de préférence encore de 50 à 55 % et par exemple environ 53 % de glucose ; et / ou
- de 30 à 55 %, de préférence de 35 à 50 %, de préférence encore de 40 à 45 % et par exemple environ 42 % de fructose ; et/ou
- de 1 à 10 %, de préférence de 3 à 8 %, de préférence encore de 4 à 6 % et par exemple environ 5 % de polysaccharides.

De manière générale, le mélange à séparer peut notamment être toute charge (de préférence d'origine industrielle) contenant du fructose et au moins un autre sucre, tel que du glucose.

Le mélange à séparer peut notamment être obtenu par isomérisation et/ou hydrolyse à partir d'une composition de glucose et/ou de saccharose. La composition de glucose et/ou de saccharose peut notamment provenir d'une étape de saccharification d'une matière première telle que du maïs, du blé, de la pomme de terre, de la canne à sucre, des fruits ou d'autres matières premières végétales. Le mélange à séparer peut aussi provenir d'une liqueur mère de cristallisation issue d'une ligne de sucre cristallisé.

Des étapes de concentration par évaporation et/ou de déminéralisation peuvent être prévues pour obtenir le mélange à séparer.

L'invention peut être plus particulièrement appliquée à la production d'une composition de fructose à partir d'une composition initiale comprenant du glucose.

### Premier procédé de production d'une composition de fructose

En faisant référence à la **figure 2****,** une installation pour la mise en oeuvre d'un premier procédé de production de composition de fructose peut par exemple comprendre les éléments suivants :
- une source 101 de composition initiale comprenant du glucose ;
- un premier évaporateur 102 alimenté par une ligne d'amenée de composition initiale comprenant du glucose 11 issue de la source 101 de composition initiale comprenant du glucose ;
- une ligne de collecte de composition initiale concentrée 12 en sortie du premier évaporateur 102 ;
- un réacteur d'isomérisation 103 alimenté par la ligne de collecte de composition initiale concentrée 12 ;
- une ligne de collecte de composition intermédiaire 13 en sortie du réacteur d'isomérisation 103 ;
- un deuxième évaporateur 104 alimenté par la ligne de collecte de composition intermédiaire 13 ;
- une ligne de collecte de composition intermédiaire concentrée 14 en sortie du deuxième évaporateur 104 ;
- un système de chromatographie multicolonnes 105 (tel que décrit ci-dessus) alimenté par la ligne de collecte de composition intermédiaire concentrée 14 ainsi que par une ligne d'éluant 18 ;
- une ligne de collecte d'extrait 19 et une ligne de collecte de raffinat 17 issues du système de chromatographie multicolonnes 105, la ligne de collecte de raffinat 17 assurant optionnellement un recyclage vers la ligne d'amenée de composition initiale 11 ;
- un troisième évaporateur 106 alimenté par une ligne d'alimentation 19a, elle-même alimentée par la ligne de collecte d'extrait 19 ;
- une ligne de collecte de composition de fructose 16 en sortie du troisième évaporateur 106 ;
- une première ligne de purge 191, une deuxième ligne de purge 192 et une troisième ligne de purge 193 en sortie respectivement du premier évaporateur 102, du deuxième évaporateur 104 et du troisième évaporateur 106 ; et
- optionnellement, une ligne de dérivation de composition intermédiaire concentrée 15, issue de la ligne de collecte de composition intermédiaire concentrée 14 et alimentant directement la ligne d'alimentation 19a (en combinaison avec la ligne de collecte d'extrait 19) en amont du troisième évaporateur 106. Alternativement, un ou plusieurs dispositifs intermédiaires peuvent être disposés sur la ligne 15. A titre d'exemple, un bac tampon peut être prévu pour le stockage de la composition intermédiaire.

Ainsi, selon ce procédé, une composition initiale comprenant du glucose subit d'abord une étape de concentration dans le premier évaporateur 102, à l'issue de laquelle on récupère une composition initiale concentrée. Celle-ci est amenée vers le réacteur d'isomérisation 103, au sein duquel une partie du glucose est converti en fructose, dans une étape d'isomérisation. En sortie du réacteur d'isomérisation 103, on récupère une composition dite intermédiaire. Cette composition intermédiaire subit une étape de concentration dans le deuxième évaporateur 104, à l'issue de laquelle on récupère une composition intermédiaire concentrée. Celle-ci est amenée vers le système chromatographique multicolonnes 105, qui est séparément alimenté en éluant, à savoir de l'eau.

Une purification chromatographique est effectuée dans le système chromatographique multicolonnes 105, en sortie duquel on récupère un extrait et un raffinat. Cette purification peut être effectuée comme décrit ci-dessus, la composition intermédiaire concentrée constituant le mélange à séparer.

Le raffinat est enrichi en glucose par rapport à la composition intermédiaire, tandis que l'extrait est enrichi en fructose. Le raffinat peut être recyclé en le combinant avec la composition initiale avant la première étape de concentration.

L'extrait peut être combiné avec une partie de la composition intermédiaire concentrée afin d'ajuster la concentration en fructose à une teneur souhaitée, puis ce flux est soumis à une étape de concentration dans le troisième évaporateur 106, à l'issue de laquelle on récupère la composition de fructose souhaitée. Cela est en particulier utile lorsqu'on souhaite obtenir une pureté finale en fructose peu élevée (par exemple, composition de type HFS 55).

Alternativement, et contrairement à ce qui est illustré sur la figure, l'extrait peut être directement soumis à l'étape de concentration dans le troisième évaporateur 106, à l'issue de laquelle on récupère la composition de fructose souhaitée, sans le combiner à un autre flux. Cela est en particulier utile lorsqu'on souhaite obtenir une pureté finale en fructose élevée (par exemple, composition de type HFS 95).

Dans le cadre de la production de fructose de haute pureté, la ligne de dérivation de composition intermédiaire 15 de la **figure 2** peut être supprimée et la ligne de collecte du raffinat 17 peut permettre un recyclage vers des unités de saccharification et/ou de déminéralisation en amont de la source 101. Afin d'éviter une concentration de polysaccharides du fait de ce recyclage, il peut être placé sur cette ligne de collecte de raffinat 17 une unité de nanofiltration ou une unité de séparation chromatographique par exemple, afin d'éliminer les polysaccharides.

De l'eau 107 est récupérée à partir de la première ligne de purge 191, de la deuxième ligne de purge 192 et de la troisième ligne de purge 193, et peut être utilisée comme source d'éluant pour le système chromatographique multicolonnes 105 ou comme toute autre source d'eau utilisable dans l'installation ou les opérations unitaires proches.

### Deuxième procédé de production d'une composition de fructose

Du fait que l'invention prévoit de travailler avec un mélange à séparer ayant une concentration massique en matière sèche de 45 à 55 %, l'invention rend possible la suppression de l'étape de concentration entre l'isomérisation et la purification chromatographique, et donc la suppression du deuxième évaporateur. Le troisième évaporateur dans le procédé ci-dessus devient alors de préférence le deuxième évaporateur dans le deuxième procédé.

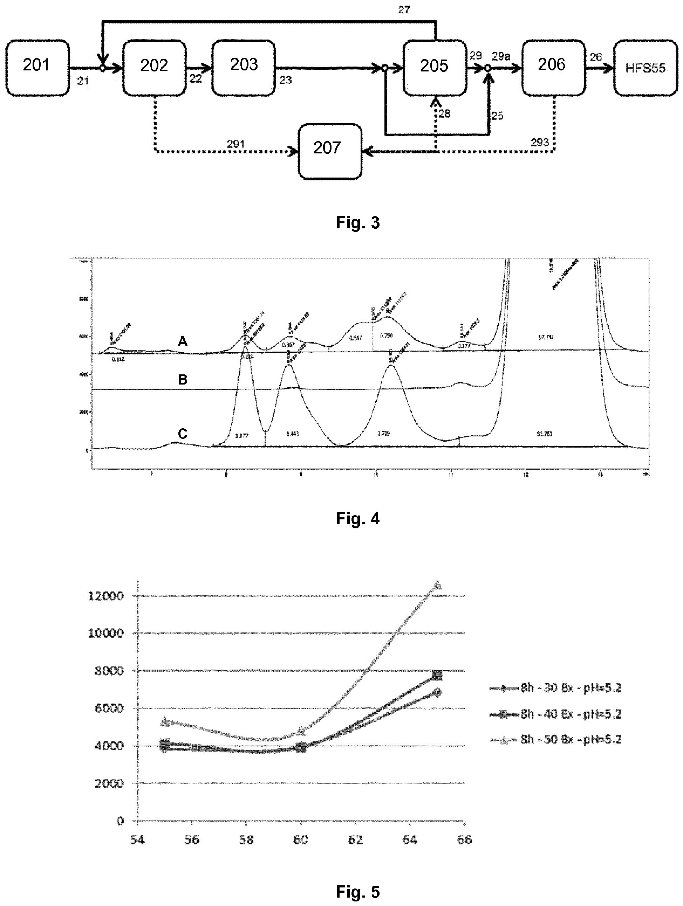

Ainsi, en faisant référence à la **figure 3****,** un exemple d'installation pour la mise en oeuvre du deuxième procédé de production de composition de fructose peut comprendre les éléments suivants :
- une source 201 de composition initiale comprenant du glucose ;
- un premier évaporateur 202 alimenté par une ligne d'amenée de composition initiale comprenant du glucose 21 issue de la source 201 de composition initiale comprenant du glucose ;
- une ligne de collecte de composition initiale concentrée 22 en sortie du premier évaporateur 202 ;
- un réacteur d'isomérisation 203 alimenté par la ligne de collecte de composition initiale concentrée 22 ;
- une ligne de collecte de composition intermédiaire 23 en sortie du réacteur d'isomérisation 203 ;
- un système de chromatographie multicolonnes 205 (tel que décrit ci-dessus) alimenté par la ligne de collecte de composition intermédiaire 23 ainsi que par une ligne d'éluant 28 ;
- une ligne de collecte d'extrait 29 et une ligne de collecte de raffinat 27 issues du système de chromatographie multicolonnes 5, la ligne de collecte de raffinat 27 assurant optionnellement un recyclage vers la ligne d'amenée de composition initiale 21 ;
- un deuxième évaporateur 206 alimenté par une ligne d'alimentation 29a, elle-même alimentée par la ligne de collecte d'extrait 29 ;
- une ligne de collecte de composition de fructose 26 en sortie du deuxième évaporateur 206 ;
- une première ligne de purge 291 et une deuxième ligne de purge 293 en sortie respectivement du premier évaporateur 202 et du deuxième évaporateur 206 ; et
- optionnellement, une ligne de dérivation de composition intermédiaire 25, issue de la ligne de collecte de composition intermédiaire 23 et alimentant directement la ligne d'alimentation 29a (en combinaison avec la ligne de collecte d'extrait 29) en amont du deuxième évaporateur 206. Alternativement, un ou plusieurs dispositifs intermédiaires peuvent être disposés sur la ligne 25. A titre d'exemple, un bac tampon peut être prévu pour le stockage de la composition intermédiaire.

Ainsi, une composition initiale comprenant du glucose subit d'abord une étape de concentration dans le premier évaporateur 202, à l'issue de laquelle on récupère une composition initiale concentrée. Celle-ci est amenée vers le réacteur d'isomérisation 203, au sein duquel une partie du glucose est converti en fructose, dans une étape d'isomérisation. L'isomérisation du glucose en fructose n'est pas totale. En sortie du réacteur d'isomérisation 203, on récupère une composition dite intermédiaire. Celle-ci est amenée vers le système chromatographique multicolonnes 205, qui est séparément alimenté en éluant, à savoir de l'eau.

Une purification chromatographique est effectuée dans le système chromatographique multicolonnes 205, en sortie duquel on récupère un extrait et un raffinat. Le raffinat est enrichi en glucose par rapport à la composition intermédiaire, tandis que l'extrait est enrichi en fructose. Le raffinat est optionnellement recyclé en le combinant avec la composition initiale avant la première étape de concentration.

L'extrait peut être combiné avec une partie de la composition intermédiaire afin d'ajuster la concentration en fructose à une teneur souhaitée, puis ce flux est soumis à une étape de concentration dans le troisième évaporateur 206, à l'issue de laquelle on récupère la composition de fructose souhaitée. Cela est en particulier utile lorsqu'on souhaite obtenir une pureté finale en fructose peu élevée (par exemple, composition de type HFS 55).

Alternativement, et contrairement à ce qui est illustré sur la figure, l'extrait peut être directement soumis à l'étape de concentration dans le troisième évaporateur 206, à l'issue de laquelle on récupère la composition de fructose souhaitée, sans le combiner à un autre flux. Cela est en particulier utile lorsqu'on souhaite obtenir une pureté finale en fructose élevée (par exemple, composition de type HFS 95).

Dans le cadre de la production de fructose de haute pureté, la ligne de dérivation de composition intermédiaire 25 de la **figure 3** est supprimée et la ligne de collecte de raffinat 27 peut permettre un recyclage vers des unités de saccharification et/ou de déminéralisation en amont de la source 201. Afin d'éviter la concentration des polysaccharides du fait de ce recyclage, il peut être placé sur cette ligne de collecte de raffinat 27 une unité de nanofiltration ou une unité de séparation chromatographique par exemple, afin d'éliminer les polysaccharides.

De l'eau 207 est récupérée à partir de la première ligne de purge 291 et de la deuxième ligne de purge 293. Cette eau récupérée peut être utilisée comme source d'éluant pour le système chromatographique multicolonnes 205 ; alternativement, de l'eau fraîche peut être utilisée en tout ou partie pour l'éluant.

De préférence, une étape de déminéralisation (non représentée sur la figure) peut être effectuée entre l'étape d'isomérisation 203 et l'étape de chromatographie 205. Le système de déminéralisation comprend alors des colonnes remplies de résine échangeuse d'ions, cationique et/ou anionique, en tant que phase stationnaire.

De préférence, dans le premier procédé comme dans le deuxième procédé, une étape d'élimination de la couleur résiduelle de l'extrait (ou décoloration) est effectuée avant la concentration de l'extrait dans le troisième évaporateur 106, respectivement le deuxième évaporateur 206. Celle-ci peut être effectuée en disposant une unité de décoloration (non représentée sur la figure) entre le système de chromatographie multicolonnes 105, 205 et l'évaporateur 106, 206 en aval de celui-ci. La décoloration peut comprendre le passage du flux d'extrait sur une résine échangeuse d'ions cationique et/ou anionique et/ou sur un lit de charbon actif sous forme poudre ou grains. Une filtration stérile peut être associée à cette étape.

Les évaporateurs 102, 104, 106, 202, 206 peuvent être à plaques ou tubulaires, à simple effet ou multiples effets, à simple passe ou recirculation, à vapeur ou à recompression mécanique de vapeur, avec ou sans thermocompresseur.

La réaction d'isomérisation est de préférence une réaction enzymatique. Une enzyme telle que l'isomérase est mise en contact avec le produit dans un réacteur, de préférence à une température comprise entre 50 et 60°C, de préférence à un pH compris entre 7 et 8. Les enzymes tels que Sweetzyme^{®} de Novozymes ou Gensweet^{®} de Genencor sont utilisés pour cette opération.

Le procédé est de préférence continu.

Dans le deuxième procédé, la composition intermédiaire obtenue à l'issue de l'étape d'isomérisation ne subit pas d'étape de concentration par évaporation d'eau avant l'étape de purification chromatographique. Autrement, dit, aucun évaporateur n'est prévu entre le réacteur d'isomérisation 203 et le système de chromatographie multicolonnes 205.

Il est possible que la ligne de collecte de composition intermédiaire 23 relie directement le réacteur d'isomérisation 203 au système de chromatographie multicolonnes 205, sans aucun intermédiaire. Alternativement, un ou plusieurs dispositifs intermédiaires peuvent être disposés entre le réacteur d'isomérisation 203 et le système de chromatographie multicolonnes 205. A titre d'exemple, un bac tampon peut être prévu pour le stockage de la composition intermédiaire.

De préférence, dans le deuxième procédé, la concentration massique en matière sèche de la composition intermédiaire en entrée du système de chromatographie multicolonnes 205 est égale à la concentration massique en matière sèche de la composition intermédiaire en sortie du réacteur d'isomérisation 203, le cas échéant à ± 5 % près, ou à ± 4 % près, ou à ± 3 % près, ou à ± 2 % près, ou à ± 1 % près, ou de manière stricte.

La tolérance ci-dessus est exprimée en pourcentages de matière sèche. Pour prendre un exemple, si une composition présente une concentration massique en matière sèche de 50 % à ± 5 % près, cela signifie que la composition présente une concentration massique en matière sèche de 45 à 55 %.

Il est possible d'envisager par exemple une légère dilution de la composition intermédiaire avant le système de chromatographie multicolonnes 205, par exemple par un apport d'eau. Mais il est préféré pour plus de simplicité qu'aucun ajustement actif de la concentration massique en matière sèche de la composition intermédiaire ne soit effectué entre le réacteur d'isomérisation 203 et le système de chromatographie multicolonnes 205.

### Compositions impliquées dans les procédés de production de composition de fructose de l'invention

La composition initiale utilisée dans le premier procédé et dans le deuxième procédé ci-dessus comprend du glucose. Il s'agit de préférence d'une composition aqueuse. Il s'agit de préférence d'un sirop de glucose dit à haut niveau de dextrose. Elle présente de préférence une concentration massique en matière sèche de 25 à 35 %, de préférence de 28 à 33 %, et de préférence encore d'environ 31 %.

La composition initiale utilisée dans les procédés ci-dessus contient de préférence une proportion massique de glucose (par rapport à la matière sèche) supérieure ou égale à 50 %, ou à 80 %, ou à 90 %. De préférence encore, elle contient une proportion massique de glucose de 95 % environ. De préférence, le reste de la matière sèche est principalement composé de polysaccharides.

Après l'étape de concentration, on obtient la composition initiale concentrée. Celle-ci présente essentiellement la même composition en sucres que la composition initiale, mais elle présente une concentration massique en matière sèche supérieure, par exemple de 40 à 58 %, de préférence de 45 à 55 %, de préférence encore de 48 à 52 %, et de préférence encore d'environ 50 %.

La composition intermédiaire, qui est obtenue à l'issue de l'isomérisation, comporte également une concentration massique en matière sèche par exemple de 40 à 58 %, de préférence de 45 à 55 %, de préférence encore de 48 à 52 %, et de préférence encore d'environ 50 %. De préférence, la concentration massique en matière sèche de la composition intermédiaire à l'issue de l'isomérisation est sensiblement identique à la concentration massique en matière sèche de la composition initiale concentrée.

Lors de l'étape d'isomérisation, une partie du glucose est converti en fructose. Dans certains modes de réalisation, la composition intermédiaire contient une proportion massique de glucose (par rapport à la matière sèche) de 40 à 65 %, de préférence de 45 à 60 %, de préférence encore de 50 à 55 % et par exemple d'environ 53 %. Dans certains modes de réalisation, la composition intermédiaire contient une proportion massique de fructose (par rapport à la matière sèche) de 30 à 55 %, de préférence de 35 à 50 %, de préférence encore de 40 à 45 % et par exemple d'environ 42 %. Dans certains modes de réalisation, la composition intermédiaire contient une proportion massique de polysaccharides (par rapport à la matière sèche) de 1 à 10 %, de préférence de 3 à 8 %, de préférence encore de 4 à 6 % et par exemple d'environ 5 %.

A l'issue de la purification chromatographique, on obtient un extrait enrichi en fructose et donc appauvri en glucose et un raffinat enrichi en glucose et donc appauvri en fructose.

Dans certains modes de réalisation, la composition de fructose récupérée (obtenue après concentration de l'extrait, dans la ligne de collecte de composition de fructose 26) comporte une concentration massique en matière sèche d'au moins 75 %, de préférence d'au moins 76 %, et par exemple d'environ 77 %.

Dans certains modes de réalisation, la composition de fructose récupérée contient une proportion massique de glucose (par rapport à la matière sèche) de 35 à 48 %, de préférence de 38 à 45 %, de préférence encore de 39 à 42 %, par exemple d'environ 40 %. Dans certains modes de réalisation, la composition de fructose récupérée contient une proportion massique de fructose (par rapport à la matière sèche) de 50 à 60 %, de préférence de 52 à 58 %, de préférence encore de 54 à 56 %, par exemple d'environ 55 %. Dans certains modes de réalisation, la composition de fructose récupérée contient une proportion massique de polysaccharides (par rapport à la matière sèche) de 2 à 8 %, de préférence de 3 à 7 %, de préférence encore de 4 à 6 %, par exemple d'environ 5 %.

Dans d'autres modes de réalisation, la composition de fructose récupérée contient une proportion massique de fructose (par rapport à la matière sèche) supérieure ou égale à 95 %, de préférence à 96 %, de préférence encore à 97 %, de préférence encore à 98 %, de préférence encore à 98,5 %.

De préférence, au moins 80 % en masse du fructose contenu dans le mélange à séparer est récupéré dans l'extrait, de préférence encore au moins 90 % en masse.

### EXEMPLES

Les exemples suivants illustrent l'invention sans la limiter.

Dans ces exemples, un système de purification chromatographique de type SSMB a été utilisé. Le système comprend 4 colonnes remplies de résine XA2004-30Ca ou XA2004-31Ca de Novasep Process en tant que phase stationnaire, sur une hauteur de lit de deux mètres dans chaque colonne.

On note BV₁, BV₂, BV₃ et BV₄ les volumes respectifs de phase mobile dans les zones 1, 2, 3 et 4. Dans les exemples ci-dessous, le volume d'éluant (noté BVₑₐᵤ et égal à BV₁-BV₄) est ajusté dans une plage de 0,11 à 0,25. Le volume de charge à traiter (noté BV_{feed} et égal à BV₃-BV₂) est ajusté dans une plage de 0,11 à 0,30. On effectue un balayage des débits BV₁ et BV₂ sur les plages respectives suivantes : de 0,65 à 0,75 et de 0,55 à 0,65. Les volumes BV₃ et BV₄ sont calculés de la façon suivante : BV₃=BV₂+BV_{feed} et BV₄=BV₁-BVₑₐᵤ.

Les ajustements de BV₁ et BV₂ fluctuent d'un système à l'autre pour des raisons de variabilité de densité de phase stationnaire. En revanche, cette variabilité n'a pas d'impact sur les performances dues au volume d'eau et au volume de charge utilisés.

### Exemple 1 (comparatif)

Cet exemple de référence est mis en oeuvre à partir d'un mélange à séparer présentant une concentration massique en matière sèche de 50 %, et présentant en outre les caractéristiques suivantes : une proportion massique de glucose par rapport à la matière sèche totale de 53%, une proportion massique de fructose par rapport à la matière sèche totale de 42% et une proportion massique de polysaccharides par rapport à la matière sèche totale de 5%.

Dans cet exemple, la purification chromatographique est effectuée à une température de 65°C. Le volume d'éluant utilisé BVₑₐᵤ est de 0,205 et le volume de mélange à séparer injecté BV_{feed} est de 0,145. La pureté atteinte en fructose dans l'extrait est de 97,3 % en masse, pour un rendement de 90 % en masse.

### Exemple 2 (caractérisation de la dégradation du fructose)

Dans un premier temps, trois échantillons de compositions de fructose ont été analysés par chromatographie analytique.

La **figure 4** montre des chromatogrammes analytiques obtenus pour les trois échantillons suivants :
- A : fructose purifié par un procédé SSMB dont la charge est à 50 Brix, et fonctionnant à 65°C (comme dans l'exemple 1) ;
- B : sirop de fructose pur ;
- C : sirop de fructose pur après un vieillissement pendant 17 heures à 65°C.

On constate l'apparition sur les chromatogrammes d'impuretés similaires dans les échantillons A et C par rapport à l'échantillon B.

Dans un deuxième temps, la teneur en impuretés dans un sirop de fructose pur a été étudiée en fonction de la concentration de ce sirop de fructose et en fonction de la température à laquelle le sirop est soumis.

Plus précisément, des chromatogrammes analytiques ont été obtenus pour différents échantillons soumis pendant 8 heures à des températures de 55, 60 et 65°C et à une concentration de 30, 40 ou 50 degrés Brix. L'aire totale des impuretés a été mesurée pour chaque chromatogramme obtenu. Les résultats sont représentés à la **figure 5****.**

On constate que la dégradation thermique est accélérée lorsque la concentration de la composition est élevée. De plus, le contrôle de la dégradation est meilleur si la température appliquée est inférieure à 65°C.

### Exemple 3 (invention)

Cet exemple de référence est mis en oeuvre à partir d'un mélange à séparer présentant une concentration massique en matière sèche de 50 %, et présentant en outre les caractéristiques suivantes : Une proportion massique de glucose par rapport à la matière sèche totale de 53%, une proportion massique de fructose par rapport à la matière sèche totale de 42% et une proportion massique de polysaccharides par rapport à la matière sèche totale de 5%.

Dans cet exemple, la purification chromatographique est effectuée à une température de 60°C. Le volume d'éluant utilisé BVₑₐᵤ est de 0,205 et le volume de mélange à séparer injecté BV_{feed} est de 0,15. La pureté atteinte en fructose dans l'extrait est de 98,5 % en masse, pour un rendement de 92 % en masse.

Il a été observé dans ces conditions que le volume de zone 4 devait être ajusté de façon à obtenir un rendement des polysaccharides de 70 %, de préférence 75 %, de préférence 80 % au raffinat. Le BV de zone 4 est ainsi de préférence inférieur à 0,56, de préférence inférieur à 0,54.

Dans les conditions de l'exemple 3, l'utilisation de phase stationnaire de granulométrie comprise entre 200 et 250 µm permet l'obtention de rendements plus élevés de l'ordre de 97 %. Le nombre de colonnes est avantageusement compris entre 4 et 6.

## Revendications

1. Procédé de purification d'un mélange à séparer contenant du fructose, dans un système de chromatographie multicolonnes, le procédé comprenant successivement, de manière cyclique :
- une étape de collecte d'un raffinat, une étape d'injection du mélange à séparer, une étape de collecte d'un extrait et une étape d'injection d'éluant ;
dans lequel le mélange à séparer présente une concentration massique en matière sèche de 45 à 55 %, le procédé étant mis en oeuvre à une température de 50 à 62°C ; et
dans lequel :
- le volume d'éluant injecté est de 0,12 à 0,28 BV ; et
- le volume de mélange à séparer injecté est de 0,13 à 0,40 BV, l'unité BV signifiant « *Bed Volume* » et correspondant au volume de phase mobile rapporté au volume de lit de phase stationnaire.

2. Procédé selon la revendication 1, dans lequel le mélange à séparer présente une concentration massique en matière sèche de 48 à 52 %, de préférence d'environ 50 %.

3. Procédé selon la revendication 1 ou 2, qui est mis en oeuvre à une température de 55 à 60°C.

4. Procédé selon l'une des revendications 1 à 3, dans lequel l'extrait contient une proportion massique de fructose, par rapport à la matière sèche totale, supérieure ou égale à 95 %, de préférence supérieure ou égale à 98 %.

5. Procédé selon l'une des revendications 1 à 4, dans lequel au moins 90 % en masse du fructose contenu dans le mélange à séparer est récupéré dans l'extrait.

6. Procédé selon l'une des revendications 1 à 5, dans lequel le mélange à séparer comprend des polysaccharides, et dans lequel au moins 70 %, de préférence au moins 80 % en masse des polysaccharides contenus dans le mélange à séparer sont récupérés dans le raffinat.

7. Procédé selon l'une des revendications 1 à 6, dans lequel le système de chromatographie multicolonnes comprend de 4 à 6 cellules ; et/ou comprend des colonnes ayant une longueur de 1,0 à 2,6 m, de préférence de 1,4 à 2,0 m.

8. Procédé selon l'une des revendications 1 à 7, dans lequel :
- le volume d'éluant injecté est de 0,12 à 0,22 BV.

9. Procédé selon l'une des revendications 1 à 8, dans lequel le système de chromatographie multicolonnes comprend une pluralité de colonnes et des liaisons fluidiques inter-colonnes, et dans lequel :
- la vitesse des fluides dans les liaisons fluidiques inter-colonnes est supérieure à 0,5 m/s, de préférence supérieure à 1 m/s et de préférence encore supérieure à 1,5 m/s ; et/ou
- le volume des liaisons fluidiques inter-colonnes est inférieur à 10 %, de préférence inférieur à 5 % et de préférence inférieur à 3 % du volume des colonnes.

10. Procédé selon l'une quelconque des revendications 1 à 9, dans lequel le système de chromatographie multicolonnes comprend une zone 4 située entre une ligne de collecte du raffinat et une ligne d'injection d'éluant, la zone 4 comprenant un volume de phase mobile inférieur à 0,56 BV, de préférence inférieur à 0,54 BV.

11. Procédé de production d'une composition de fructose comprenant les étapes successives suivantes :
- fourniture d'une composition initiale ;
- hydrolyse, isomérisation, concentration par évaporation et/ou déminéralisation de la composition initiale pour obtenir une composition intermédiaire ;
- purification de la composition intermédiaire en tant que mélange à séparer selon le procédé de l'une des revendications 1 à 10, permettant d'obtenir un raffinat riche en glucose et un extrait riche en fructose ;
- concentration de l'extrait par évaporation d'eau.

12. Procédé selon la revendication 11, comprenant en outre une étape d'élimination de couleur résiduelle de l'extrait avant l'étape de concentration de l'extrait, de préférence par résine échangeuse d'ions et/ou par charbon actif ainsi que, de préférence, une étape de filtration stérile.

13. Procédé selon l'une des revendications 11 à 12, dans lequel le raffinat est recyclé et ajouté à la composition initiale avant l'étape de concentration de la composition initiale.

14. Procédé selon l'une des revendications 11 à 13, dans lequel :
- la composition de fructose produite contient une proportion massique de fructose, par rapport à la matière sèche totale, supérieure ou égale à 95 %, de préférence supérieure ou égale à 98 %.

15. Procédé selon l'une des revendications 11 à 14, comprenant une étape d'élimination de polysaccharides contenus dans le raffinat par nanofiltration ou purification chromatographique, suivie du recyclage du raffinat vers la composition initiale.

## Patentansprüche

1. Verfahren zur Reinigung einer zu trennenden Mischung, die Fruktose enthält, in einem System der Mehrsäulenchromatographie, wobei das Verfahren aufeinanderfolgend auf cyclische Weise Folgendes umfasst:
- einen Schritt des Sammelns eines Raffinats, einen Schritt des Injizierens der zu trennenden Mischung, einen Schritt des Sammelns eines Extrakts und einen Schritt des Injizierens eines Elutionsmittels;
wobei die zu trennende Mischung eine Massenkonzentration an Trockensubstanz von 45 bis 55 % aufweist, wobei das Verfahren bei einer Temperatur von 50 bis 62°C durchgeführt wird; und
wobei:
- das Volumen des injizierten Elutionsmittels von 0,12 bis 0,28 BV beträgt; und
- das Volumen der injizierten zu trennenden Mischung von 0,13 bis 0,40 BV beträgt, wobei die Einheit BV "Bed Volume" bedeutet und dem Volumen der mobilen Phase entspricht, die dem Bettvolumen der stationären Phase eingetragen wird.

2. Verfahren nach Anspruch 1, wobei die zu trennende Mischung eine Massenkonzentration an Trockensubstanz von 48 bis 52 %, vorzugsweise von ungefähr 50 % aufweist.

3. Verfahren nach Anspruch 1 oder 2, das bei einer Temperatur von 55 bis 60°C durchgeführt wird.

4. Verfahren nach einem der Ansprüche 1 bis 3, wobei der Extrakt eine Massenproportion von Fruktose mit Bezug auf die gesamte Trockensubstanz von mehr als oder gleich wie 95 %, vorzugsweise von mehr als oder gleich 98 % aufweist.

5. Verfahren nach einem der Ansprüche 1 bis 4, wobei mindestens 90 Massenprozent der Fruktose, enthalten in der zu trennenden Mischung, im Extrakt wiedergewonnen wird.

6. Verfahren nach einem der Ansprüche 1 bis 5, wobei die zu trennende Mischung Polysaccharide umfasst, und wobei mindestens 70, vorzugsweise mindestens 80 Massenprozent der Polysaccharide, enthalten in der zu trennenden Mischung, im Raffinat wiedergewonnen werden.

7. Verfahren nach einem der Ansprüche 1 bis 6, wobei das System der Mehrsäulenchromatographie von 4 bis 6 Zellen umfasst; und/oder Säulen umfasst, die eine Länge von 1,0 bis 2,6 m, vorzugsweise von 1,4 bis 2,0 m aufweisen.

8. Verfahren nach einem der Ansprüche 1 bis 7, wobei
- das Volumen des injizierten Elutionsmittels von 0,12 bis 0,22 BV beträgt.

9. Verfahren nach einem der Ansprüche 1 bis 8, wobei das System der Mehrsäulenchromatographie eine Vielzahl von Säulen und fluidische Verbindungen zwischen den Säulen umfasst, und wobei:
- die Geschwindigkeit der Fluide in den fluidischen Verbindungen zwischen den Säulen grösser als 0,5 m/s, vorzugsweise größer als 1 m/s und noch bevorzugter grösser als 1,5 m/s ist; und/oder
- das Volumen der fluidischen Verbindungen zwischen den Säulen kleiner als 10 %, vorzugsweise kleiner als 5 % und vorzugsweise kleiner als 3 % des Volumens der Säulen ist.

10. Verfahren nach einem der Ansprüche 1 bis 9, wobei das System der Mehrsäulenchromatographie eine Zone 4 umfasst, die sich zwischen einer Sammellinie des Raffinats und einer Injektionslinie des Elutionsmittels befindet, wobei die Zone 4 eine Volumen der beweglichen Phase umfasst, das kleiner als 0,56 BV, vorzugsweise kleiner als 0,54 BV ist.

11. Verfahren zur Herstellung einer Fruktosezusammensetzung, umfassend die folgenden aufeinanderfolgenden Schritte:
- Bereitstellen einer anfänglichen Zusammensetzung,
- Hydrolysieren, Isomerisieren, Konzentrieren durch Verdampfung und/oder Demineralisieren der anfänglichen Zusammensetzung, um eine Zwischenzusammensetzung zu erhalten;
- Reinigen der Zwischenzusammensetzung als zu trennende Mischung gemäß dem Verfahren nach einem der Ansprüche 1 bis 10, wodurch ermöglicht wird, ein glukosereiches Raffinat und einen fruktosereichen Extrakt zu erhalten;
- Konzentrieren des Extrakts durch Verdampfen von Wasser.

12. Verfahren nach Anspruch 11, umfassend außerdem einen Schritt des Eliminierens von restlicher Farbe des Extrakts vor dem Schritt des Konzentrierens des Extrakts, vorzugsweise durch Ionenaustauschharz und/oder durch Aktivkohle sowie vorzugsweise einen Schritt des sterilen Filtrierens.

13. Verfahren nach einem der Ansprüche 11 bis 12, wobei das Raffinat recycelt und der anfänglichen Zusammensetzung vor dem Schritt des Konzentrierens der anfänglichen Zusammensetzung zugegeben wird.

14. Verfahren nach einem der Ansprüche 11 bis 13, wobei
- die erzeugte Fruktosezusammensetzung eine Massenproportion von Fruktose mit Bezug auf die gesamte Trockensubstanz von mehr als oder gleich wie 95 %, vorzugsweise von mehr als oder gleich wie 98 % aufweist.

15. Verfahren nach einem der Ansprüche 11 bis 14, umfassend einen Schritt des Eliminierens von Polysacchariden, die im Raffinat enthalten sind, durch Nanofiltrieren oder chromatographisches Reinigen, gefolgt vom Recyceln des Raffinats hin zur anfänglichen Zusammensetzung.

## Claims

1. Method for purifying a mixture to be separated containing fructose in a multicolumn chromatography system, the method comprising successively and cyclically:
- a step of collecting a raffinate, a step of injecting the mixture to be separated, a step of collecting an extract and a step of injecting eluent;
wherein the mixture to be separated has a dry matter mass concentration of 45 to 55%, the method being carried out at a temperature of 50 to 62°C, and wherein:
- the injected volume of eluent is from 0.12 to 0.28 BV; and
- the injected volume of mixture to be separated is from 0.13 to 0.40 BV, the unit BV standing for Bed Volume and corresponding to the volume of mobile phase relative to the volume of stationary phase bed.

2. Method according to claim 1, wherein the mixture to be separated has a dry matter mass concentration of 48 to 52%, preferably about 50%.

3. Method according to claim 1 or 2, which is implemented at a temperature of 55 to 60°C.

4. Method according to one of the claims 1 to 3, wherein the extract contains a mass proportion of fructose, relative to the total dry matter, greater than or equal to 95%, preferably greater than or equal to 98%.

5. Method according to one of the claims 1 to 4, wherein at least 90% by mass of the fructose contained in the mixture to be separated is recovered in the extract.

6. Method according to one of the claims 1 to 5, wherein the mixture to be separated comprises polysaccharides, and wherein at least 70%, preferably at least 80% by mass of the polysaccharides contained in the mixture to be separated are recovered in raffinate.

7. Method according to one of the claims 1 to 6, wherein the multicolumn chromatography system comprises from 4 to 6 cells; and/or comprises columns having a length of 1.0 to 2.6 m, preferably 1.4 to 2.0 m.

8. Method according to one of the claims 1 to 7, wherein:
- the injected volume of eluent is from 0.12 to 0.22 BV.

9. Method according to one of the claims 1 to 8, wherein the multicolumn chromatography system comprises a plurality of columns and intercolumn fluidic links, and wherein:
- the velocity of the fluids in the intercolumn fluidic links is greater than 0.5 m/s, preferably greater than 1 m/s and more preferably greater than 1.5 m/s; and/or
- the volume of the intercolumn fluidic links is less than 10%, preferably less than 5% and preferably less than 3% of the volume of the columns.

10. Method according to any one of the claims 1 to 9, wherein the multicolumn chromatography system comprises a zone 4 located between a collection line of raffinate and an injection line of eluent, the zone 4 comprising a volume of mobile phase less than 0.56 BV, preferably less than 0.54 BV.

11. Method for producing a fructose composition comprising the following successive steps:
- supply of an initial composition;
- hydrolysis, isomerization, concentration by evaporation and/or demineralization of the initial composition to obtain an intermediate composition;
- purification of the intermediate composition as a mixture to be separated according to the method of one of the claims 1 to 10, making it possible to obtain a glucose-rich raffinate and a fructose-rich extract;
- concentration of the extract by evaporation of water.

12. Method according to claim 11, further comprising a step of removing residual color from the extract prior to the concentration step of the extract, preferably by ion exchange resin and/or by activated carbon as well as, preferably, a sterile filtration step.

13. Method according to one of the claims 11 to 12, wherein the raffinate is recycled and added to the initial composition prior to the concentration step of the initial composition.

14. Method according to one of the claims 11 to 13, wherein:
- the produced fructose composition contains a mass proportion of fructose, relative to the total dry matter, greater than or equal to 95%, preferably greater than or equal to 98%.

15. Method according to one of the claims 11 to 14, comprising a step of removing polysaccharides contained in the raffinate by nanofiltration or chromatographic purification, followed by recycling the raffinate towards the initial composition.
